# FASCICULE DE BREVET EUROPEEN

(11) **EP 0 409 718 B1**
(45) Date de publication et mention de la délivrance du brevet: **14.12.1994**
(21) Numéro de dépôt: 90402050.0
(22) Date de dépôt: 17.07.1990
(51) Int. Cl.: H04N 1/32

(54) **Terminal vidéotex et de télécopie à réception automatique**
Videotex- und Telekopie-Endgerät mit automatischem Empfang
Videotex and telescopy terminal with automatic reception

(30) Priorité: 18.07.1989 FR 8909614
(43) Date de publication de la demande: 23.01.1991
(73) Titulaire: SOCIETE D'APPLICATIONS GENERALES D'ELECTRICITE ET DE MECANIQUE SAGEM, F-75783 Paris Cédex 16 (FR)
(72) Inventeur: Penalver, Georges, 78700 - Conflans Sainte Honorine (FR)
(74) Mandataire: Bloch, Gérard

(56) Documents cités:
- EP-A- 0 208 852
- EP-A- 0 222 919
- EP-A- 0 310 001
- FR-A- 2 607 646
- US-A- 3 914 539

## Description

La présente invention a pour objet un terminal vidéotex raccordable à un réseau téléphonique, pour demander et recevoir des pages de caractères en provenance d'un centre serveur également raccordé audit réseau, et comprenant:
- un clavier de commande,
- un écran de visualisation, et,
- un premier circuit d'interface pourvu d'une entrée reliée audit clavier, d'une sortie reliée audit écran, et d'un accès bidirectionnel raccordable à une ligne téléphonique dudit réseau.

Un tel terminal, bien connu en France sous le nom de "Minitel", permet notamment à des particuliers ou à des entreprises l'accès à toutes sortes d'informations contenues dans des banques de données auxquelles peuvent être reliés les centres serveurs, ou encore l'accès à un certain nombre de services susceptibles d'être rendus par ces centres serveurs.

Les informations que l'utilisateur d'un tel terminal reçoit sur son écran sont sous forme de pages de caractères, étant entendu que par "caractère", on entend ici non seulement les caractères alphanumériques classiques, mais aussi un certain nombre de symboles permettant de faire apparaître sur l'écran certains graphismes simples. Ces symboles sont en nombre limité et sont traités, en fait, comme des caractères alphanumériques, c'est à dire que chacun d'entre eux est codé avant transmission, par exemple sous la forme d'un groupe de 7 éléments binaires, ou bits, ce groupe de bits étant décodé après transmission et restitué à l'écran sous la forme du symbole correspondant. Compte-tenu du nombre limité de ces symboles, il est évident que les graphismes qui peuvent ainsi être restitués sont sommaires, ainsi que tout utilisateur d'un "Minitel" a pu s'en rendre compte. Pour cette raison, ces symboles sont souvent qualifiés de "semi-graphiques".

Si l'utilisateur d'un terminal "Minitel" souhaite conserver une trace des informations visualisées sur l'écran, il lui est possible de connecter, sur la prise péri-informatique prévue sur le terminal pour le raccordement d'équipements de type périphérique, une imprimante susceptible d'effectuer une recopie d'écran. Naturellement, les graphismes ainsi imprimés sont rigoureusement identiques à ceux qui apparaissent sur l'écran, l'imprimante étant prévue pour effectuer, en sortie du modem, la conversion des groupes de 7 bits en caractères et symboles semi-graphiques à imprimer.

Par ailleurs, pour permettre aux particuliers et aux entreprise d'échanger des informations véritablement graphiques, comme un document manuscrit, un schéma explicatif, un plan de construction ou tout autre image fixe, il existe des appareils de télécopie, ou télécopieurs.

Dans un télécopieur utilisé à l'émission, le document comportant l'image à transmettre est analysé de façon fine, pour que chacun de ses éléments d'image, ou pixel, se trouve individuellement codé. Après compression des informations résultant de cette analyse, les données correspondantes, que l'on peut véritablement qualifier de "données graphiques", sont transmises par l'intermédiaire d'un modem sur le réseau téléphonique, à destination d'un autre télécopieur utilisé à la réception. Celui-ci est pourvu, en sortie de son propre modem, d'un circuit de réception de ces données graphiques qui en effectue notamment la décompression et le décodage et commande une imprimante, par exemple une imprimante thermique, qui restitue l'image d'origine, avec une très bonne résolution, à l'heure actuelle de 8 points par millimètre, par exemple.

La procédure de communication en télécopie comprend, pour chaque envoi, des phases de protocole qui encadrent la phase de transfert, au cours de laquelle un flux de données graphiques est transmis du télécopieur émetteur vers le télécopieur récepteur. Il est prévu, pendant les phases de protocole, des échanges simultanés dans les deux sens. Au cours de la première procédure de protocole qui précède le transfert proprement dit, les télécopieurs en communication échangent notamment des informations relatives à leurs identifications et à leurs possibilités respectives. Ils procèdent également à un essai ("training") qui leur permet d'évaluer, compte-tenu de la qualité de la ligne téléphonique qui les relie, la vitesse maximale à laquelle pourra avoir lieu le transfert, cette vitesse pouvant être par exemple de 2400, 4800, 7200 ou 9600 bauds à l'heure actuelle. Après la phase de transfert qui a lieu, en mode synchrone, à la vitesse déterminée au cours de l'essai, a lieu une deuxième phase de protocole qui permet notamment l'émission d'un accusé de réception et la libération de la ligne. Les performances des modems utilisés dans les télécopieurs sont donc prévues pour qu'ils assurent les fonctions précédentes.

A l'heure actuelle, un particulier ou une entreprise qui souhaite conserver une trace écrite des informations qu'il reçoit par l'intermédiaire du vidéotex, et qui souhaite pouvoir recevoir de certains de ses correspondants des documents d'une bonne qualité graphique doit donc être équipé d'une part d'un terminal "Minitel" pourvu d'une imprimante de recopie d'écran et d'autre part d'un télécopieur. Ceci n'est pas très rationnel du point de vue du coût, dans la mesure où une telle installation comprend deux imprimantes qui ne sont jamais utilisées en même temps. Par ailleurs, si cet utilisateur ne dispose que d'une seule ligne téléphonique pour recevoir les appels relatifs à des conversations téléphoniques, ceux relatifs à de données vidéotex et ceux relatifs à des télécopies, il ne peut recevoir de télécopies ou de données vidéotex que si une personne est présente auprès du combiné téléphonique au moment où celui-ci sonne, pour raccorder manuellement la ligne téléphonique au télécopieur ou au "Minitel" si l'appel est relatif à la transmission d'une télécopie ou à des données vidéotex, respectivement.

La présente invention vise à pallier les inconvénients précédents.

A cet effet, elle a pour objet un terminal vidéotex du type défini ci-dessus, caractérisé par le fait qu'il comprend:
- un deuxième circuit d'interface raccordable à la dite ligne téléphonique et pourvu d'une sortie reliée à des moyens d'impression d'images fixes en réponse à des premières données graphiques en provenance d'une source telle qu'un centre serveur graphique ou un télécopieur raccordé audit réseau,
- des moyens de détection d'un appel, disposés sur ladite ligne téléphonique,
- des moyens pour raccorder ladite ligne téléphonique audit deuxième circuit d'interface, en réponse à un appel détecté,
- des moyens, reliés à la sortie dudit deuxième circuit d'interface, pour détecter une demande de transmission de premières données graphiques, et pour commander, en cas de demande de transmission de premières données graphiques, lesdits moyens d'impression afin qu'ils impriment lesdites premières données graphiques, et pour commander, en cas d'absence de demande de transmission de premières données graphiques, des moyens pour raccorder ladite ligne téléphonique audit premier circuit d'interface,
- des moyens d'alarme, et,
- des moyens, relies à la sortie dudit premier circuit d'interface pour détecter une demande de transmission de pages de caractères, et pour commander, en cas de demande de pages de caractères, des moyens de réception de ces pages de caractères, et pour commander, en cas d'absence de demande de transmission de pages de caractères, lesdits moyens d'alarme.

Le terminal de l'invention répond automatiquement à chaque appel, et, quelle que soit l'origine de cet appel, télécopieur, serveur vidéotex ou simplement autre personne, cet appel est aiguillé convenablement sans intervention manuelle, et sans que l'utilisateur n'ait à renoncer à la possibilité de recevoir des appels relatifs à de simples conversations téléphoniques.

De plus, le terminal de l'invention présente un autre avantage important, relatif au fait qu'il permet au cours d'un unique échange, échange souvent appelé session par l'homme du métier, de demander à une banque de données, à l'aide du clavier et par les commandes vidéotex habituelles, l'envoi de véritables informations graphiques, pour leur restitution par les moyens d'impression. La qualité de cette restitution peut être très bonne, si les moyens d'impression comprennent par exemple une imprimante thermique du même type que celle utilisée actuellement dans les télécopieurs. Une telle banque de données, susceptible de fournir de véritables informations graphiques sera accessible par un centre serveur appelé dans la suite centre serveur graphique.

La simplicité de cette procédure et son automatisation possible du côté de la banque de données augmentent notablement le champ des informations et services susceptibles d'être offerts par les centres serveurs. C'est ainsi que des cartes et plans géographiques, partitions musicales, plans d'appartement, textes en alphabet non-latin, formules mathématiques, structures moléculaires... peuvent être ainsi transmis. Les données transmises peuvent résulter d'une analyse, faite par un télécopieur adapté, de documents représentant les images à transmettre, mais elles peuvent également être engendrées directement par un système informatique, ce qui procure évidemment une qualité d'image encore meilleure que celle connue actuellement pour les télécopies, puisque la dégradation liée à l'analyse des documents de départ se trouve ainsi évitée.

Avantageusement, lesdits moyens de réception des pages de caractères comprennent lesdits moyens d'impression.

Dans ce cas, le terminal de l'invention permet la remise automatique d'informations émises par un serveur vidéotex.

Avantageusement encore, il est prévu des moyens, reliés audit premier circuit d'interface, pour convertir en deuxièmes données graphiques des données représentant des caractères à afficher sur ledit écran et pour transmettre lesdites deuxièmes données graphiques en vue de la restitution à distance desdits caractères.

Dans ce cas, le terminal permet d'émettre directement, sous forme de données graphiques, les pages de caractères ou de symboles semi-graphiques de type vidéotex, vers un autre télécopieur par exemple. Une telle transmission est de très bonne qualité, dans la mesure où les données graphiques émises ne résultent pas, comme habituellement, d'une analyse par balayage optique ("scanning") d'un ou plusieurs documents, mais ne subissent que des traitements informatiques qui n'en dégradent pas la qualité

Avantageusement encore, il est prévu des moyens, reliés audit premier circuit d'interface, pour convertir en troisièmes données graphiques des données représentant des caractères à afficher sur ledit écran , et pour commander lesdits moyens d'impression afin qu'ils restituent une copie dudit écran en réponse aux données converties.

Dans ce cas, l'imprimante permet à la fois la restitution de documents ou d'images transmis par télécopie, et la recopie des pages de caractères ou de symboles semi-graphiques apparaissant sur l'écran en mode vidéotex.

Avantageusement encore, il est prévu des moyens pour analyser des images fixes, pourvus d'une sortie reliée au deuxième circuit d'interface et délivrant des quatrièmes données graphiques, pour transmettre lesdites quatrièmes données graphiques en vue de la restitution à distance des images fixes analysées.

Dans ce cas, le terminal, en plus de ses fonctions de terminal vidéotex, a des fonctions identiques à celle d'un télécopieur, puisqu'il permet d'émettre comme de recevoir des télécopies.

Avantageusement encore, il est prévu des moyens interrupteurs pour couper,pendant les périodes de repos dudit terminal, l'alimentation en énergie électrique dudit terminal, à l'exception desdits moyens de détection d'appel, et lesdits moyens interrupteurs sont commandés par lesdits moyens de détection d'appel pour rétablir l'alimentation en énergie électrique en réponse à une détection d'appel.

Un tel terminal est donc particulièrement économique en consommation d'énergie électrique, tout en demeurant susceptible de recevoir et de traiter, même en l'absence de tout utilisateur, les appels qui arrivent sur la ligne.

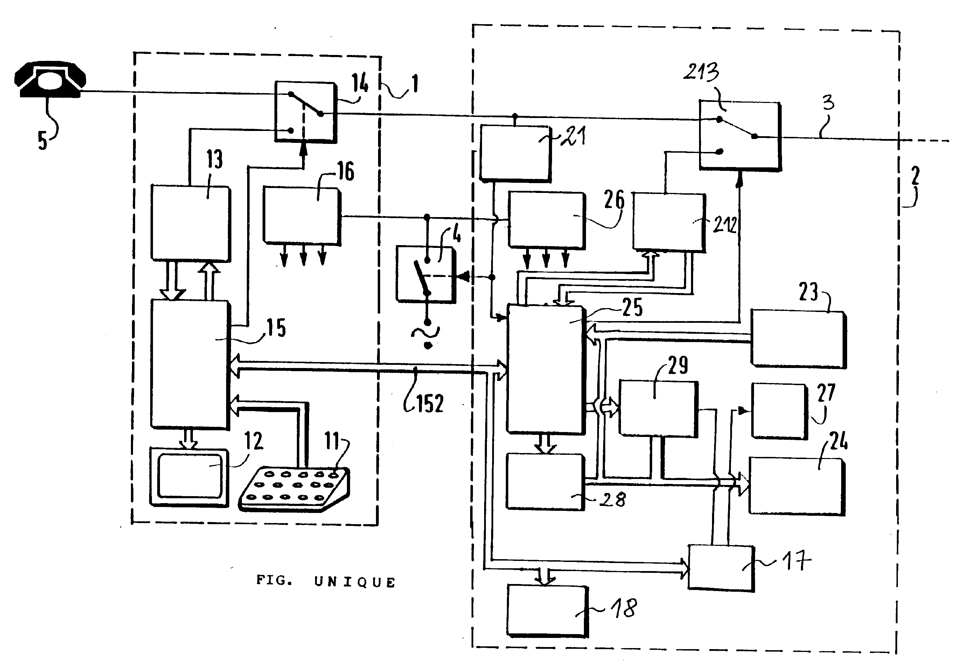

La présente invention sera mieux comprise grâce à la description suivante de la forme de réalisation préférée du terminal de l'invention, faite en se référant aux dessins annexés, sur lesquels l'unique figure représente un schéma par blocs du terminal de l'invention.

En se référant à cette figure, un terminal vidéotex de type "Minitel", et permettant de recevoir et d'émettre des documents par télécopie, est maintenant décrit.

Ce terminal comprend, de façon connue, un inverseur commandable 14 pourvu d'un contact fixe relié à une ligne téléphonique 3 par l'intermédiaire d'un autre inverseur commandable 213 qui sera décrit plus en détail dans la suite, et de deux contacts mobiles dont l'un est relié à un combiné téléphonique 5 pour permettre à l'abonné utilisateur de la ligne 3 d'établir une connexion avec un autre abonné pour une conversation téléphonique normale ou une connexion avec un centre serveur non représenté, mais également raccordé au réseau téléphonique auquel appartient la ligne 3, en vue d'un échange ou session avec ce centre serveur par l'intermédiaire du terminal "Minitel". La ligne 3 est ici une ligne du réseau téléphonique commuté et les signaux qu'elle transporte sont donc analogiques.

Le deuxième contact mobile de l'inverseur 14 est relié à l'accès bidirectionnel analogique d'un modem 13. Le modem 13, ou modulateur-démodulateur est un circuit bien connu de l'homme du métier, qui en plus de son accès bidirectionnel déjà mentionné, est pourvu d'une entrée et d'une sortie numériques ici raccordées à un circuit de gestion 15. Le modem 13 est agencé pour moduler, selon les données numériques incidentes sur son entrée numérique, un signal analogique émis sur la ligne 3, par l'intermédiaire de son accès bidirectionnel, et pour, inversement, démoduler tout signal analogique incident sur son accès bidirectionnel afin de restituer, sur sa sortie numérique, les données numériques modulant ce signal analogique.

Le circuit de gestion 15 est pourvu d'une entrée numérique reliée à un clavier de commande 11, d'une sortie numérique reliée à un écran de visualisation 12 et d'une sortie binaire reliée à l'entrée de commande de l'inverseur 14. Le circuit de gestion 15 présente également un accès bidirectionnel numérique relié à une connexion 152. On peut considérer que le modem 13 et le circuit de gestion 15 forment un circuit d'interface entre la ligne 3 et, notamment, le clavier 11 et l'écran 12.

Un circuit 16 d'alimentation en énergie électrique du modem 13, de l'écran 12, du clavier 11 et du circuit de gestion 15 est relié par l'intermédiaire d'un interrupteur commandable 4, au réseau secteur, par exemple 220V-50Hz.

Dans un souci de simplicité les connexions entre le circuit 16 et les circuits qu'il alimente n'ont pas été représentées.

Il est à noter qu'un terminal du type "Minitel" actuellement connu comprend principalement l'inverseur 14, le modem 13, l'écran 12, le clavier 11, le circuit de gestion 15 et le circuit d'alimentation 16 qui viennent d'être décrits. Pour cette raison cet ensemble a été regroupé dans un bloc unique portant la référence 1 sur les dessins. L'accès bidirectionnel du circuit de gestion 15 est la prise péri-informatique prévue sur le terminal pour le raccordement de dispositifs périphériques.

Selon l'invention, il est prévu d'adjoindre, à ce terminal connu, les circuits et dispositifs regroupés dans le bloc portant la référence 2 sur les dessins, et qui vont être maintenant décrits.

Ils comprennent tout d'abord l'inverseur commandable 213 dont il a été question, pourvu d'un contact fixe relié à la ligne 3 et de deux contacts mobiles dont le premier est relié au contact fixe de l'inverseur 14. Le deuxième contact mobile de l'inverseur 213 est relié à l'accès bidirectionnel analogique d'un modem 212. Le modem 212 est pourvu, en plus de son accès bidirectionnel, d'une entrée et d'une sortie numériques ici raccordées à un circuit de gestion 25. Le modem 212 est agencé pour moduler, selon les données numériques incidentes sur son entrée numérique, un signal analogique émis sur la ligne 3, par l'intermédiaire de son accès bidirectionnel, et pour, inversement, démoduler tout signal analogique incident sur son accès bidirectionnel afin de restituer, sur sa sortie numérique, les données numériques modulant ce signal analogique.

Le bloc 2 comprend également un détecteur de sonnerie 21, disposé en dérivation sur la ligne 3, ici entre les deux inverseurs 213 et 14. La sortie binaire du détecteur 21 est reliée d'une part à l'entrée de commande de l'interrupteur 4, et d'autre part à une entrée binaire du circuit de gestion 25.

Le circuit de gestion 25 est également pourvu d'une sortie binaire reliée à l'entrée de commande de l'inverseur 213, d'un accès bidirectionnel numérique relié à la connexion 152, d'une première entrée numérique reliée à la sortie numérique du modem 212, d'une deuxième entrée numérique reliée à un dispositif 23 d'analyse de documents et à un circuit de conversion 28, d'une première sortie numérique reliée à l'entrée numérique du modem 212, d'une deuxième sortie numérique reliée un circuit 29 de détection de demande de transmission de données graphiques, et d'une troisième sortie numérique reliée au circuit de conversion 28. Là encore, on peut considérer que le modem 212 et le circuit 25 forment un circuit d'interface entre la ligne 3 et le reste des circuits du bloc 2.

Le circuit 29 de détection de demande de transmission de données graphiques est pourvu d'une sortie numérique reliée à l'entrée d'un dispositif 24 d'impression de documents, et d'une sortie binaire reliée à une entrée binaire dont est pourvu un circuit 17 de détection d'une demande de transmission de pages de caractères par un serveur vidéotex. Ce circuit 17 est par ailleurs pourvu d'un accès bidirectionnel relié a la connexion 152 et d'une sortie binaire reliée à un circuit 27 d'alarme sonore.

Le circuit de conversion 28 est pourvu d'une sortie numérique reliée à l'entrée du dispositif 24 d'impression de documents, ainsi que, comme cela a déjà été signalé, à la deuxième entrée numérique du circuit de gestion 25. Le circuit 28 convertit des données relatives à des caractères ou à des symboles semi-graphiques comme ceux affichés sur l'écran 12 en données graphiques destinées au dispositif 24 d'impression de documents.

Ce dispositif 24 d'impression comprend ici une imprimante thermique et ses circuits associés, du type de celle actuellement rencontrée dans les télécopieurs et de très bonne résolution, typiquement de l'ordre de 8 points par millimètre.

Un circuit 26 d'alimentation en énergie électrique des circuits du bloc 2, à l'exclusion du circuit 21 de détection de sonnerie,est relié par l'intermédiaire de l'interrupteur commandable 4, au réseau secteur. Dans un souci de simplicité les connexions entre le circuit 26 et les circuits qu'il alimente n'ont pas été représentées.

Un circuit 18 de réception et de mémorisation de pages de caractères est relié à la connexion 152.

Le terminal qui vient d'être décrit fonctionne comme cela va maintenant être décrit.

On considère tout d'abord le cas de communication établies à l'initiative de l'utilisateur du terminal. Dans ce cas, celui-ci établit la communication de façon habituelle, et lorsqu'il souhaite envoyer ou recevoir un document par télécopie, il commande, à l'aide de touches prévues à cet effet, ou éventuellement à l'aide du clavier 11, le circuit de gestion 25 afin qu'il relie le modem 212 à la ligne 3, ainsi que le circuit de détection 29, le dispositif d'analyse 23, et le dispositif d'impression 24 à ce même modem 212.

La procédure de communication de données graphiques comprend des phases de protocole, au cours desquelles le terminal et ladite source échangent des questions et des réponses sous forme de données transmises dans un sens et dans l'autre, phases de protocole encadrant des phases de transfert, au cours desquelles un flux de données graphiques est transmis. Dans le cas de l'émission d'un document par le terminal, le destinataire peut réguler le flux émis en envoyant des données de régulation. Dans le cas de la réception d'un document par le terminal, celui-ci peut envoyer des données de régulation vers l'émetteur du document. Le protocole est celui bien connu utilisé pour la télécopie.

Lorsqu'il désire communiquer avec un centre serveur vidéotex, l'utilisateur commande, par l'intermédiaire du clavier 11 et des circuits de gestion 15 et 25, les inverseurs 213 et 14 afin qu'ils raccordent la ligne 3 au modem 13.

Enfin, lorsqu'il désire établir une communication phonique, c'est à dire avec une autre personne, l'utilisateur décroche simplement le combiné 5 et numérote, car les circuits 15 et 25 sont agencés pour que, lorsque le terminal est au repos, les inverseurs 14 et 213 relient la ligne 3 au combiné 5.

On considère maintenant le cas de communications établies à l'initiative d'un demandeur inconnu.

Lorsque le terminal est au repos, l'interrupteur 4 est ouvert et les inverseurs 14 et 213 sont dans leur position représentée sur la figure, où le combiné 5 est raccordé à la ligne 3.

Seul le circuit 21 de détection de sonnerie est opérationnel. Il peut être alimenté par le réseau lui même, ou, si besoin est, par une batterie tampon.

Lorsqu'un appel arrive sur la ligne, le combiné 5 se met à sonner, mais assez brièvement, comme cela va être mieux compris dans la suite. Le signal de sonnerie est en effet détecté dans le circuit 21. Il en résulte, par l'intermédiaire de l'interrupteur 4, la mise sous tension de l'ensemble du terminal.

Le circuit de gestion 25 commande alors l'inverseur 213 pour que le modem 212 soit raccordé à la ligne 3. Le combiné 5 cesse donc de sonner.

Le modem 212 reçoit alors les signaux analogiques sur la ligne 3, signaux qu'il démodule et qui sont alors transmis, par l'intermédiaire du circuit 25 au circuit 29. Celui-ci détecte une éventuelle demande de transmission de données graphiques en tentant d'engager, avec le terminal demandeur, le protocole spécifique à la transmission de données graphiques.

Si le circuit 29 parvient à engager le protocole, il commande le circuit d'impression 24 afin que le document transmis soit imprimé.

En l'absence, par contre, de demande de transmission de données graphiques, le circuit 29 ne parvient pas à engager le protocole. C'est que l'appel émane alors soit d'un serveur vidéotex qui cherche à transmettre des pages de caractères, soit d'une personne qui désire établir une communication phonique. Le circuit 29 commande alors, par l'intermédiaire des circuits 15 et 25, d'une part l'inverseur 14 pour raccorder le modem 13 à la ligne 3, et d'autre part le circuit 17 pour que celui ci détecte, le cas échéant, une demande de transmission de pages de caractères, en essayant d'engager, avec le demandeur, un protocole vidéotex spécifique à une telle transmission. Si le circuit 17 parvient à engager ce protocole, il commande par l'intermédiaire de la connexion 152, par exemple, le circuit 18 de réception et de mémorisation afin que celui-ci reçoive et mémorise ces pages de caractères, que l'utilisateur pourra venir consulter par la suite.

En l'absence de demande de transmission de pages de caractères, le circuit 17 commande le circuit d'alarme 27 de façon à ce que l'utilisateur, averti par l'alarme, décroche le combiné 5, le raccorde en actionnant l'inverseur 14, et engage la conversation.

A l'issue de celle-ci, l'utilisateur laisse l'inverseur 14 dans cet état, et une temporisation, non représentée dans un souci de simplicité, provocant l'ouverture de l'interrupteur 4, le terminal se retrouve dans l'état de repos.

En cas d'absence de l'utilisateur, le demandeur, n'obtenant pas de réponse, va finir par raccrocher et libérer la ligne 3. Le terminal revient à l'état de repos après un certain temps.

Le circuit 18 de réception et de mémorisation n'est pas obligatoire dans le cas où il est avantageusement prévu de faire imprimer les pages de caractères, transmises par le serveur, par le dispositif d'impression 24. Ainsi, la remise automatique d'informations vidéotex par un serveur est possible, sans qu'un circuit de mémorisation comme le circuit 18 soit nécessaire. Dans ce cas, c'est le dispositif d'impression 24 lui-même qui est utilisé pour la réception des pages de caractères.

Naturellement, les terminaux du type qui vient d'être décrit peuvent échanger des documents entre eux, avec les télécopieurs de type classique, et avec les bases de données graphiques qui ont été prévues à cet effet.

Pour faire de la recopie d'écran "Minitel", l'utilisateur commande le raccordement du circuit de conversion 28 à la sortie du modem 13, pour convertir en données graphiques des données représentant des caractères affichés sur l'écran 12, et l'impression par le dispositif d'impression 24 afin qu'il restitue une copie de l'écran 12 en réponse aux données converties. Il est également possible, du fait que la sortie du circuit 28 est reliée au circuit 25, de transmettre ces données graphiques en vue de la restitution à distance desdits caractères, par un télécopieur ou par un autre terminal du type de celui de l'invention.

Naturellement, le dispositif 23 d'analyse de documents, s'il est pratique, n'est pas indispensable à tous les utilisateurs, et il peut dans certains cas être supprimé.

Le dispositif d'impression thermique qui a été décrit n'est évidemment pas limitatif, et tout système d'impression procurant une résolution suffisante peut naturellement être utilisé, comme par exemple une imprimante laser.

Naturellement, comme sur un télécopieur de type conventionnel, il est possible, si le terminal est pourvu d'un dispositif d'analyse, d'effectuer des copies locales de documents.

Le terminal qui vient d'être décrit est raccordé au réseau téléphonique commuté, mais il est à la portée de l'homme du métier de le modifier pour un raccordement à un réseau numérique comme le réseau numérique à intégration de services ("R.N.I.S").

Dans la description qui vient d'être faite, on a fait apparaître, dans un souci de clarté, des blocs distincts pour chacune des fonctions importantes réalisée dans le terminal de l'invention. Il est évident que, dans la pratique, un seul circuit de calcul, par exemple un microprocesseur peut assumer à lui seul un certain nombre ou la totalité de ces fonctions. La programmation d'un tel microprocesseur, ainsi que la conception des circuits dont le fonctionnement vient d'être décrit est à la portée de l'homme du métier.

## Revendications

1. Terminal vidéotex raccordable à un réseau téléphonique, pour demander et recevoir des pages de caractères en provenance d'un centre serveur également raccordé audit réseau, et comprenant:
- un clavier de commande (11),
- un écran de visualisation (12), et,
- un premier circuit d'interface (13, 15) pourvu d'une entrée reliée audit clavier (11), d'une sortie reliée audit écran (12), et d'un accès bidirectionnel raccordable à une ligne téléphonique (3).dudit réseau,
terminal caractérisé par le fait qu'il comprend:
- un deuxième circuit d'interface (212, 25) raccordable à la dite ligne téléphonique (3) et pourvu d'une sortie reliée à des moyens d'impression (24) d'images fixes, en réponse à des premières données graphiques en provenance d'une source telle qu'un centre serveur graphique ou un télécopieur raccordé audit réseau,
- des moyens (21) de détection d'un appel, disposés sur ladite ligne téléphonique (3),
- des moyens (25, 213) pour raccorder ladite ligne téléphonique (3) audit deuxième circuit d'interface (212, 25), en réponse à un appel détecté,
- des moyens (29), reliés à la sortie dudit deuxième circuit d'interface (25), pour détecter une demande de transmission de premières données graphiques, et pour commander, en cas de demande de transmission de premières données graphiques, lesdits moyens d'impression (24) afin qu'ils impriment lesdites premières données graphiques, et pour commander,en cas d'absence de demande de transmission de premières données graphiques, des moyens (14) pour raccorder ladite ligne téléphonique (3) audit premier circuit d'interface (13, 15)
- des moyens d'alarme (27), et,
- des moyens (17), reliés audit premier circuit d'interface (13, 15) pour détecter une demande de transmission de pages de caractères, et pour commander, en cas de demande de pages de caractères, des moyens (18, 24) de réception de ces pages de caractères, et pour commander, en cas d'absence de demande de transmission de pages de caractères, lesdits moyens d'alarme (27).

2. Terminal selon la revendication 1, dans lequel lesdits moyens de réception des pages de caractères comprennent lesdits moyens d'impression (24).

3. Terminal selon l'une des revendications 1 ou 2, dans lequel il est prévu des moyens (25, 28), reliés audit premier circuit d'interface (13, 15) pour convertir en deuxièmes données graphiques des données représentant des caractères à afficher sur ledit écran (12) et pour transmettre lesdites deuxièmes données graphiques en vue de la restitution à distance desdits caractères.

4. Terminal selon l'une des revendications 1 à 3, dans lequel il est prévu des moyens (25, 28), reliés audit premier circuit d'interface (13, 15)), pour convertir en troisièmes données graphiques des données représentant des caractères à afficher sur ledit écran (12), et pour commander lesdits moyens d'impression afin qu'ils restituent une copie dudit écran (12) en réponse aux données converties.

5. Terminal selon l'une des revendication 1 à 4, dans lequel il est prévu des moyens (23, 25) pour analyser des images fixes, pourvus d'une sortie reliée au deuxième circuit d'interface (212, 25) et délivrant des quatrièmes données graphiques, pour transmettre lesdites quatrièmes données graphiques en vue de la restitution à distance des images fixes analysées.

6. Terminal selon l'une des revendications 1 à 5, dans lequel il est prévu des moyens interrupteurs (4) pour couper,pendant les périodes de repos dudit terminal, l'alimentation en énergie électrique dudit terminal, à l'exception desdits moyens (21) de détection d'appel, et lesdits moyens interrupteurs (4) sont commandés par lesdits moyens (21) de détection d'appel pour rétablir l'alimentation en énergie électrique en réponse à une détection d'appel.

## Patentansprüche

1. Bildschirmtext-Endgerät, welches an ein Telefonnetz angeschlossen werden kann, um mit Zeichen versehene Seiten von einem Server-Zentrum, welches ebenfalls an dieses Netz angeschlossen ist, anzufordern und zu erhalten, umfassend:
- eine Funktionstastatur (11)
- einen Bildschirm (12) und
- eine erste Interfaceschaltung (13, 15), die einen mit der Tastatur (11) verbundenen Eingang, einen mit dem Bildschirm (12) verbundenen Ausgang und einen bidirektionellen Zugriff, welcher mit einer Telefonleitung (3) des Netzes verbunden werden kann, aufweist,
Endgerät, dadurch gekennzeichnet, daß es umfaßt:
- eine zweite Interfaceschaltung (212, 25), welche mit der Telefonleitung (3) verbunden werden kann und mit einem Ausgang versehen ist, der mit Druckmitteln (24) verbunden ist, die dazu dienen, in Antwort auf erste graphische Daten, welche aus einer Quelle wie einem graphischen Server-Zentrum oder einem an das Netz angeschlossenen Fernkopierer stammen, Einzelbilder drucken,
- Anruferkennungsmittel (21), welche auf der Telefonleitung (3) angeordnet sind,
- Mittel (25, 213), um die Telefonleitung (3) in Antwort auf einen erkannten Anruf an die zweite Interfaceschaltung (212, 25) anzuschließen,
- Mittel (29), welche mit dem Ausgang der zweiten Interfaceschaltung (25) verbunden sind, um eine Aufforderung zur Übertragung erster graphischer Daten zu erkennen und um im Fall einer Aufforderung zur Übertragung erster graphischer Daten die Druckmittel (24) zu steuern, damit diese die ersten graphischen Daten drucken, und um bei Nichtvorhandensein einer Aufforderung zur Übertragung erster graphischer Daten Mittel (14) zu steuern, um die Telefonleitung (3) an die erste Interfaceschaltung (13, 15) anzuschließen,
- Alarmmittel (27) und
- Mittel (17), welche mit der ersten Interfaceschaltung (13, 15) verbunden sind, um eine Aufforderung zur Übertragung von Seiten mit Zeichen zu erkennen und um im Falle einer Aufforderung zur Übertragung von mit Zeichen versehenen Seiten Empfangsmittel (18, 24) für diese Seiten mit Zeichen zu steuern, und um bei Nichtvorhandensein einer Aufforderung zur Übertragung von mit Zeichen versehenen Seiten die Alarmmittel (27) zu steuern.

2. Endgerät nach Anspruch 1, bei welchem die Empfangsmittel für die mit Zeichen versehenen Seiten die Druckmittel (24) umfassen.

3. Endgerät nach einem der Ansprüche 1 oder 2, bei welchem Mittel (25, 28), die mit der ersten Interfaceschaltung (13, 15) verbunden sind, vorgesehen sind, um Daten, welche Zeichen darstellen, die auf dem Bildschirm (12) angezeigt werden sollen, in zweite graphische Daten umzuwandeln und um die zweiten graphischen Daten im Hinblick auf die Fernausgabe dieser Zeichen zu übertragen.

4. Endgerät nach einem der Ansprüche 1 bis 3, bei welchem Mittel (25, 28), die mit der ersten Interfaceschaltung (13, 15) verbunden sind, vorgesehen sind, um Daten, welche Zeichen darstellen, die auf dem Bildschirm (12) angezeigt werden sollen, in dritte graphische Daten umzuwandeln und um die Druckmittel zu steuern, damit diese in Antwort auf die umgewandelten Daten eine Kopie des Bildschirms (12) ausgeben.

5. Endgerät nach einem der Ansprüche 1 bis 4, bei welchem Mittel (23, 25) zur Analyse von Einzelbildern vorgesehen sind, die mit einem mit der zweiten Interfaceschaltung (212, 25) verbundenen Ausgang versehen sind und vierte graphische Daten liefern, um diese vierten graphischen Daten im Hinblick auf die Fernausgabe der analysierten Einzelbilder zu übertragen.

6. Endgerät nach einem der Ansprüche 1 bis 5, bei welchem Unterbrechungsmittel (4) vorgesehen sind, um während der Ruhezeiten des Endgerätes die Stromversorgung des Endgerätes, mit Ausnahme der Anruferkennungsmittel (21), zu unterbrechen, und die Unterbrechungsmittel (4) von den Anruferkennungsmitteln (21) gesteuert werden, um die Stromversorgung in Antwort auf eine Anruferkennung wiederherzustellen.

## Claims

1. A videotext terminal connectable to a telephone network to request and receive pages of characters coming from a service centre likewise connected to the said network, and comprising:
- a control keyboard (11),
- a display screen (12) and
- a first interface circuit (13, 15) provided with an input connected to the said keyboard (11), an output connected to the said screen (12), and a bidirectional access connectable to a telephone line (3) of the said network,
the terminal being characterised in that it comprises:
- a second interface circuit (212, 25) connectable to the said telephone line (3) and provided with an output connected to means (24) for printing fixed images in response to first graphic data coming from a source such as a graphic service centre or a facsimile machine connected to the said network,
- means (21) for detecting a call, disposed in the said telephone line (3),
- means (25, 213) for connecting the said telephone line (3) to the said second interface circuit (212, 25) in response to a detected call,
- means (29) connected to the output of the said second interface circuit (25) to detect a request for transmission of first graphic data and to control, in the case of a request for transmission of first graphic data, the said printing means (24) so that they print the said first graphic data, and to control, in the case of the absence of a request for transmission of first graphic data, means (14) to connect the said telephone line (3) to the said first interface circuit (13, 15),
- alarm means (27) and,
- means (17) connected to the said first interface circuit (13, 15) to detect a request for transmission of pages of characters and to control, in the case of a request for pages of characters, means (18, 24) for receiving these pages of characters, and to control, in the case of the absence of a request for transmission of pages of characters, the said alarm means (27).

2. A terminal according to claim 1, in which the said means for receiving pages of characters comprise the said printing means (24).

3. A terminal according to one of claims 1 or 2, in which means (25, 28) are provided connected to the said first interface circuit (13, 15) to convert data, representing characters to be displayed on the said screen (12), into second graphic data and to transmit the said second graphic data in order to restore the said characters remotely.

4. A terminal according to one of claims 1 to 3, in which means (25, 28) are provided connected to the said first interface circuit (13, 15) to convert data, representing characters to be displayed on the screen (12), into third graphic data and to control the said printing means so that they reproduce a copy of the said screen (12) in response to the converted data.

5. A terminal according to one of claims 1 to 4, in which means (23, 25) are provided to analyse fixed images, provided with an output connected to the second interface circuit (212, 25) and providing fourth graphic data, to transmit the said fourth graphic data in order to restore the analysed fixed images remotely.

6. A terminal according to any of claims 1 to 5, in which circuit breaker means (4) are provided to cut off the supply of electrical energy of the said terminal, during periods when the terminal is at rest, with the exception of the said call detection means (21), and the said circuit breaker means (4) are controlled by the said call detection means (21) in order to re-establish the supply of electrical energy in response to a call being detected.
